# EUROPÄISCHE PATENTSCHRIFT

(11) **EP 0 836 022 B1**
(45) Veröffentlichungstag und Bekanntmachung des Hinweises auf die Patenterteilung: **15.05.2002**
(21) Anmeldenummer: 96810668.2
(22) Anmeldetag: 07.10.1996
(51) Int. Cl.: F16C 39/06

(54) **Magnetische Lagervorrichtung und Verfahren zum Betrieb derselben**
Magnetic bearing device and method of operating the device
Palier magnétique et procédé de fonctionnement de celui-ci

(43) Veröffentlichungstag der Anmeldung: 15.04.1998
(73) Patentinhaber: Lust Antriebstechnik GmbH, 35633 Lahnau (DE)
(72) Erfinder: Schöb, Reto, Dr., 8604 Volketswil (CH)
(74) Vertreter: Sulzer Management AG

(56) Entgegenhaltungen:
- EP-A- 0 364 993
- DE-A- 2 451 972
- DE-A- 19 518 539
- FR-A- 2 322 294
- US-A- 5 179 308
- US-A- 5 256 637
- US-A- 5 319 273

## Beschreibung

Die Erfindung betrifft eine magnetische Lagervorrichtung gemäss dem Oberbegriff von Anspruch 1. Die Erfindung betrifft weiter ein Verfahren zum Betrieb der magnetischen Lagervorrichtung gemäss dem Oberbegriff von Anspruch 4.

Aus der EP 0 473 723 A1 ist eine magnetische Lagervorrichtung zur berührungslosen Lagerung einer rotierbaren Welle bekannt. Diese Lagervorrichtung weist den Nachteil auf, dass zur Ansteuerung jeder elektromagnetischen Spule ein bipolar arbeitender Leistungsverstärker beziehungsweise ein bipolarer, als H-Brücke geschalteter Stromsteller erforderlich ist. Ein derartiger, als H-Brücke geschalteter Stromsteller weist vier ansteuerbare Schalter auf und ist daher relativ teuer, sodass eine aufwendige und entsprechend teure Ansteuer- und Regelvorrichtung erforderlich, um diese bekannte magnetische Lagervorrichtung zu betreiben.

Aus der Druckschrift US 5,319,273, die den Oberbegriffen der Ansprüche 1 und 4 entspricht, ist eine weitere magnetische Lagervorrichtung zur berührungslosen Lagerung einer rotierbaren Welle bekannt. Diese Lagervorrichtung erfordert einen symmetrischen Vormagnetisierungsfluss sowie eine bipolare Speisung der Steuerwicklungen, was eine entsprechend teure Vorrichtung zur Speisung der Steuerwicklungen erfordert.

Es ist Aufgabe der vorliegenden Erfindung eine wirtschaftlich vorteilhaftere Lagervorrichtung sowie ein entsprechendes Verfahren zum Betrieb der Lagervorrichtung vorzuschlagen.

Diese Aufgabe wird gelöst durch die Merkmale des kennzeichnenden Teils des Anspruchs 1 bzw. 4. Die Unteransprüche beziehen sich auf weitere, vorteilhafte Ausgestaltungen der Erfindung.

Die erfindungsgemäße Anordnung weist den Vorteil auf, dass durch diese Wicklung eine Vormagnetisierung in einer Spule der Lagervorrichtung erzeugbar ist, und dass deshalb die gegenüberliegend angeordneten Spulenkerne mit einem unipolaren Strom ansteuerbar sind, um eine ansteuerbare und regelbare magnetische Lagerkraft auf die Welle zu bewirken. Ein Vorteil der Erfindung ist darin zu sehen, dass somit zur Ansteuerung der Welle in x-Richtung oder in y-Richtung, das heisst pro räumlichem Freiheitsgrad,je ein einziger unipolarer Steller beziehungsweise eine unipolare Stellvorrichtung aufweisend einen einzigen Schalter erforderlich ist. Ein Vorteil der Erfindung ist darin zu sehen, dass eine derartig ausgestaltete magnetische Lagervorrichtung mit einer unipolar arbeitenden Stellvorrichtung betreibbar ist, welche Stellvorrichtung üblicherweise einen einzigen ansteuerbaren Schalter bedarf, weshalb die Stellvorrichtung sehr kostengünstig ausführbar ist.

Die Erfindung wird an Hand mehrerer Ausführungsbeispiele beschrieben. Es zeigen:
- Fig. 1: eine Seitenansicht einer magnetischen Lagervorrichtung zur Lagerung einer Welle in x- und y-Richtung;
- Fig. 2: eine Seitenansicht einer weiteren, magnetischen Lagervorrichtung zur Lagerung einer Welle in y-Richtung;
- Fig. 3: ein Beispiel einer Verändung des Steuerstrom isy in Funktion der Zeit, wobei in den Fig. 3a bis 3e folgende Detailaspekte dargestellt sind:;
- Fig. 3a: der Steuerstrom isy beziehungsweise der magnetische Fluss φ1y in Funktion der Zeit;
- Fig. 3b: der magnetische Fluss φ2y in Funktion der Zeit;
- Fig. 3c: die nach oben auf den Rotor bewirkte Kraft F1y in Funktion der Zeit;
- Fig. 3d: die nach unten auf den Rotor bewirkte Kraft F2y in Funktion der Zeit;
- Fig. 3e: die Summe der in vertikaler Richtung y auf den Rotor bewirkten Kräfte Fy in Funktion der Zeit;
- Fig. 4: ein Ausführungsbeispiel einer elektronischen Stellvorrichtung;
- Fig. 4a: eine unipolare Stellvorrichtung beziehungsweise ein unipolarer Stromsteller als Halbbrücke geschaltet;
- Fig.5a: eine magnetische Lagervorrichtung zur magnetischen Lagerung einer Welle bezüglich fünf Freiheitsgrade;
- Fig. 5b: eine elektronische Stellvorrichtung für die Lagervorrichtung gemäss Fig. 5a;
- Fig. 5c: ein weiteres Ausführungsbeispiel einer elektronischen Stellvorrichtung für die Lagervorrichtung gemäss Fig. 5a;
- Fig. 6a,6c,6d: eine Seitenansicht weiterer Ausführungsbeispiele magnetischer Lagervorrichtungen;
- Fig. 6b: eine Längsansicht des Ausführungsbeispieles gemäss Fig. 6a;
- Fig. 7a,7b,7c,7d: eine Seiten- und Längsansicht weiterer Ausführungsbeispiele einer magnetischen Lagervorrichtung;
- Fig. 8: einen Längsschnitt durch eine in axialer Richtung wirkende magnetische Lagervorrichtung;
- Fig. 9: ein weiteres Ausführungsbeispiel einer elektronischen Stellvorrichtung.

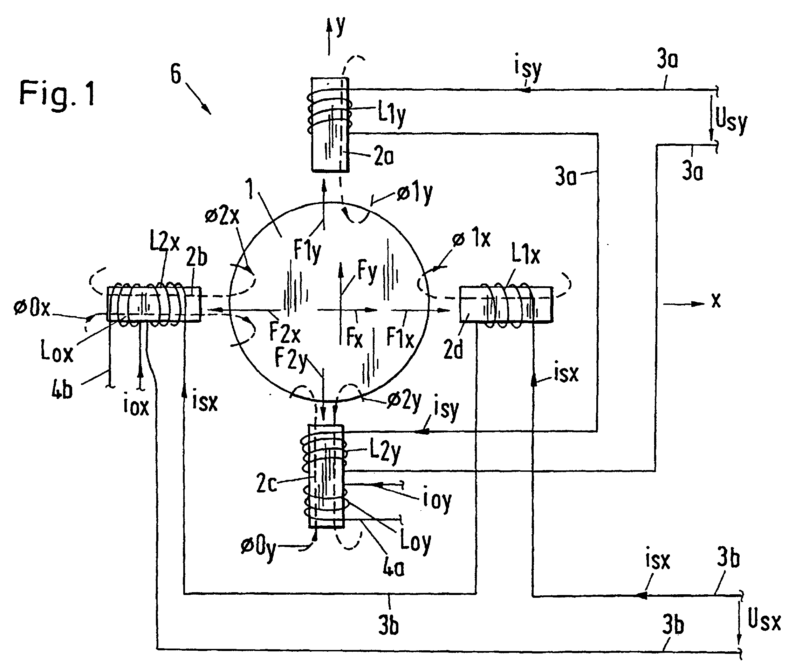

Fig. 1 zeigt eine Seitenansicht einer magnetischen Lagervorrichtung 6, welche nebst weiteren, nicht dargestellten Komponenten, zwei Paare gegenüberliegend angeordneter Spulenkerne 2a,2c;2b,2d mit Wicklungen L1y,L2y,Loy;L1x,L2x,Lox umfasst. Die magnetische Lagervorrichtung 6 dient dazu die Lage der rotierbaren Welle 1 durch magnetisch wirkende Kräfte derart in X-Richtung und y-Richtung zu beeinflussen, dass die Welle 1 berührungsfrei in der Lagervorrichtung 6 gehalten ist. Die Lage der Welle 1 wird in x-Richtung und y-Richtung von einem Sensor erfasst, und dieses Signal einer Ansteuer- und Regelvorrichtung zugeführt, welche eine unipolare Stellvorrichtung 5 derart ansteuert, dass durch die erzeugte Steuerspannung Usy,Usx beziehungsweise durch den erzeugten Steuerstrom isy,isx in den Spulenkernen 2a,2c;2b,2d derartig starke Magentfelder erzeugt werden, dass der Rotor 1 berührungslos schwebend zwischen den Spulenkernen 2a,2c;2b,2d gehalten wird. Die gegenüberliegend angeordneten Spulenkerne 2a,2c weisen gleichsinnig verlaufend gewickelte Wicklungen L1y,L2y auf, welche über einen elektrischen Leiter 3a in Serie geschaltet sind, sodass die Wicklungen L1y,L2y von einem gemeinsamen Steuerstrom isy durchflossen sind, beziehungsweise über den beiden Wicklungen L1y,L2y eine Steuerspannung Usy anliegt. Am Spulenkern 2c ist eine zusätzliche, zur Wicklung L2y gegensinnig verlaufend gewickelte Vormagnetisierungswicklung Loy angeordnet, welche von einem Gleichstrom ioy durchflossen ist um eine zu der durch die Wicklung L2y bewirkten magnetischen Durchflutung φ2y entgegengesetzt wirkende magnetische Durchflutung φoy zu erzeugen. Die durch die Wicklung L2y und die Vormagnetisierungswicklung Loy bewirkten magnetischen Durchflutungen φ2y,φ0y müssen immer gegensinnig verlaufend sein. Die Vormagnetisierungswicklung Loy kann auch zur Wicklung L2y gleichsinnig verlaufend gewickelt sein, wobei in diesem Falle die beiden Wicklungen L2y und Loy von in entgegengesetzter Richtung fliessenden Strömen durchflossen sind.

Im Spulenkerne 2a ist ein magnetischer Fluss φ1y erzeugbar und im Spulenkerne 2c ein bezüglich dem Fluss φ1y in gleicher Richtung verlaufender magnetischer Fluss φ2y. Dem magnetischen Fluss φ2y ist der in entgegengesetzer Richtung verlaufende Vormagnetisierungsfluss φ0y überlagert. Die Summe der in den Spulenkernen 2a,2c fliessenden magnetischen Flüsse bewirken die magnetischen Kräfte F1y, F2y auf die Welle 1. In x-Richtung sind ebenfalls gegenüberliegende Spulenkerne 2b,2d angeordnet, welche gleichsinnig verlaufend gewickelte Wicklungen L1x,L2x aufweisen sowie eine am Spulenkerne 2b angeordnete Vormagnetisierungswicklung Lox, sodass magnetische Flüsse φ1x,φ2x,φ0x erzeugbar sind, welche entsprechende, in x-Richtung auf die Welle 1 wirkende Kräfte F1x, F2x erzeugen.

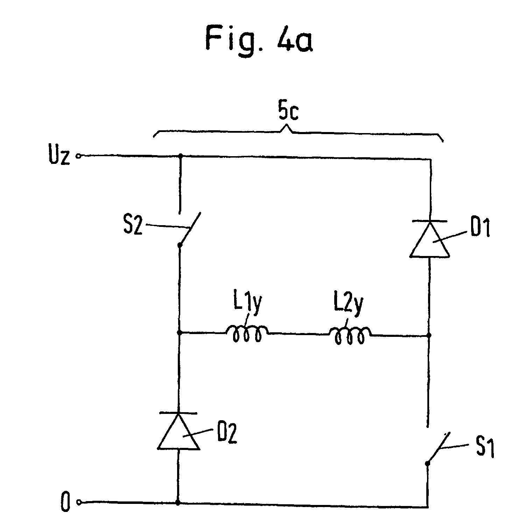

Fig. 4 zeigt ein elektrisches Schaltbild mit einer unipolaren Stellvorrichtung 5 zur Ansteuerung der in Serie geschalteten Wicklungen L1y,L2y mit einer Steuerspannung Us. Der dargestellte unipolare Stromsteller 5c weist nur einen einzigen Schalter 5b auf, welcher von einer nicht dargestellten Regelvorrichtung mit einer Pulsweitenmodulation PWM angesteuert wird. Die magnetische Lagervorrichtung 6 gemäss Fig. 1 wird derart betrieben, dass die zusätzliche Speisespannung Us1 gleich der Hälfte der Zwischenkreisspannung Uz beträgt. Die Zwischenkreisspannung Uz ist eine den unipolaren Stromsteller 5c versorgende Gleichspannung.

Fig. 4a zeigt ein weiteres Ausführungsbeispiel eines unipolaren Stromstellers 5c, welcher zwei Schalter S1,S2 sowie zwei Freilaufdioden D1,D2 aufweist und als eine Halbbrücke ausgestaltet ist. Die beiden Windungen L1y,L2y sind in Serie geschaltet und von einem gemeinsamen Strom druchflossen.

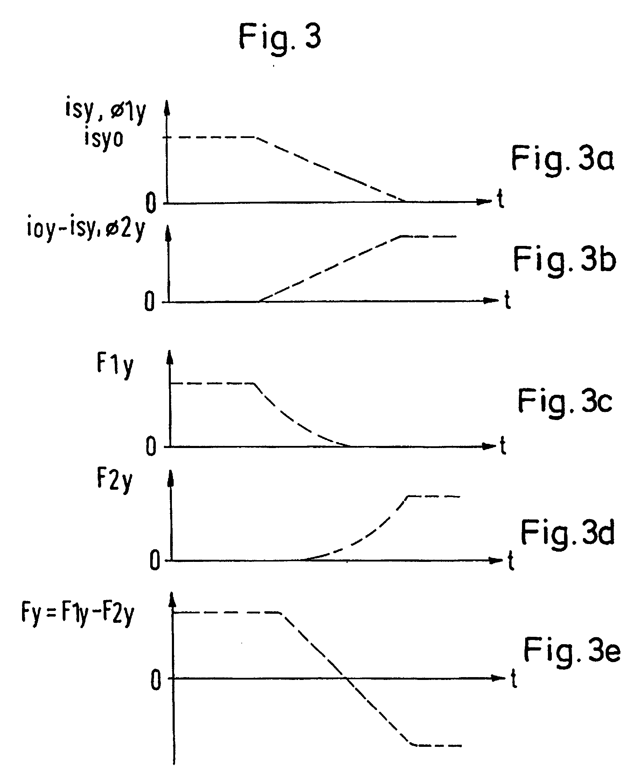

Fig. 3 zeigt die Auswirkung einer zeitlichen Veränderung des durch die Windungen L1y,L2y fliessenden Stromes isy auf den magnetischen Fluss φ1y, φ2y sowie die daraus resultierenden Kräfte F1y,F2y und deren Summenkraft Fy. Im Diagramm gemäss Fig. 3a wird der Strom isy, ausgehend von einem konstant verlaufenden Ausgangswert isyo, in Funktion der Zeit t rampenförmig auf einen Wert Null abgesenkt, was in der Spule 2a einen zum Verlauf des Stromes isy ähnlich verlaufenden magnetischen Fluss φ1y bewirkt. Der in der Vormagnetisierungswicklung Loy fliessende, konstante Strom ioy ist gleich gross gewählt wie der Ausgangsstromwert isyo. Da die Wicklungen Loy und L2y die gleiche Anzahl Windungen aufweisen und gegensinnig verlaufend gewickelt sind, werden die beiden durch die Wicklungen Loy und L2y erzeugten magnetischen Flüsse gegenseitig kompensiert, sodass zu Beginn in der Spule 2c ein gesamter magnetischer Fluss φ2y von Null anliegt. Da der Strom isy in Funktion der Zeit absinkt wird in der Spule 2c ein zunehmend grösser werdender magnetischer Fluss φ2y erzeugt, welcher bei einem Strom von isy gleich Null am grössten ist. Dabei wird dieser magnetische Fluss φ2y durch den durch die Vormagnetisierungswicklung Loy fliessende konstante Vormagnetisierungsstrom ioy bewirkt. Fig. 3c zeigt die durch den magnetischen Fluss φ1y auf den Rotor 1 bewirkte Kraft F1y in Funktion der Zeit. Fig. 3d zeigt die durch den magnetischen Fluss φ2y auf den Rotor 1 bewirkte Kraft F2y in Funktion der Zeit. Der zeitliche Verlauf der Differenz dieser beiden Kräfte F1y-F2y, welche die gesamte in y-Richtung auf den Rotor 1 bewirkte Kraft Fy ergibt, ist in Fig. 3e dargestellt. Die Kraft Fy ändert sich linear in Funktion des Steuerstromes isy. Ein Vorteil der Anordnung gemäss Fig. 1 ist darin zu sehen, dass der Steuerstrom isy gemäss Fig. 3a nur positive Werte, in einem Wertebereich zwischen dem maximalen Wert isyo und dem minimalen Wert Null, einnimmt. Daher sind die in Serie geschalteten Wicklungen L1y,L2y von einer unipolaren Stellvorrichtung 5 ansteuerbar. Die unipolare Stellvorrichtung 5 erlaubt, wie in Fig. 3e dargestellt, bezüglich der y-Richtung sowohl eine positive als auch eine negative Kraft Fy zu erzeugen. Über die in Serie geschalteten Wicklungen L1x,L2x ist auf dieselbe Art eine in x-Richtung wirkende, positive oder negative Kraft Fx auf den Rotor 1 erzeugbar. Die Lage der Welle 1 in der Lagervorrichtung 6 ist somit mit je einer unipolaren Stellvorrichtung 5 in x-Richtung und in y-Richtung regelbar.

Anstelle einer Serieschaltung der Wicklungen L1y,L2y;L1x,L2x können diese auch parallel geschaltet sein, sodass an den Wicklungen L1y,L2y oder L1x,L2x die gleiche Spannung Usy;Usx anliegt. Die Vormagnetisierungswicklung Loy;Lox ist vorzugsweise auf einem der gegenüberliegend angeordneten Spulenkerne 2a,2c angeordnet. Dadurch wird im Spulenkern 2c;2b der durch die Wicklung L2y,L2x erzeugte magnetische Fluss φ2y, φ2x durch den in der Vormagnetisierungswicklung Loy;Lox erzeugten magnetischen Fluss geschwächt. Die Vormagnetisierungswicklung Loy kann auch auf beiden gegenüberliegend angeordneten Spulenkerne 2a,2c verteilt angeordnet sein, wobei der auf dem Spulenkern 2a angeordnete Teil der Vormagnetisierungswicklung Loy eine kleinere Windungszahl aufweist als der auf dem Spulenkerne 2c angeordnete Teil der Vormagnetisierungswicklung Loy, bei gleichem Vormagnetisierungsstrom. Der auf dem Spulenkern 2a angeordnete Teil der Vormagnetisierungswicklung Loy weist bei gleicher Stromrichtung denselben Wicklungssinn auf wie L1y. Der auf dem Spulenkern 2c angeordnete Teil der Vormagnetisierungwicklung weist bei gleicher Stromrichtung den umgekehrten Wicklungsssinn auf wie die Wicklung L2y.

Die Vormagnetisierungswicklung Loy ist derart ausgestaltet und wird derart mit einem konstanten Strom ioy gespeist, dass, wie in Fig. 3a und 3b dargestellt, bei einem Strom isyo der magnetische Fluss φ2y ungefähr Null beträgt. Diese Bedingung kann durch eine entsprechende Anzahl Windungen der Vormagnetisierungswicklung Loy und/oder durch den Betrag des konstanten Stromes ioy bestimmt werden. Somit ist die Vormagnetisierungswicklung Loy mit einer beliebigen Anzahl Windungen ausführbar, wenn dabei die Grösse des konstanten Stromes ioy entsprechend angepasst wird. Dasselbe gilt natürlich auch für die Vormagnetisierungswicklung Lox.

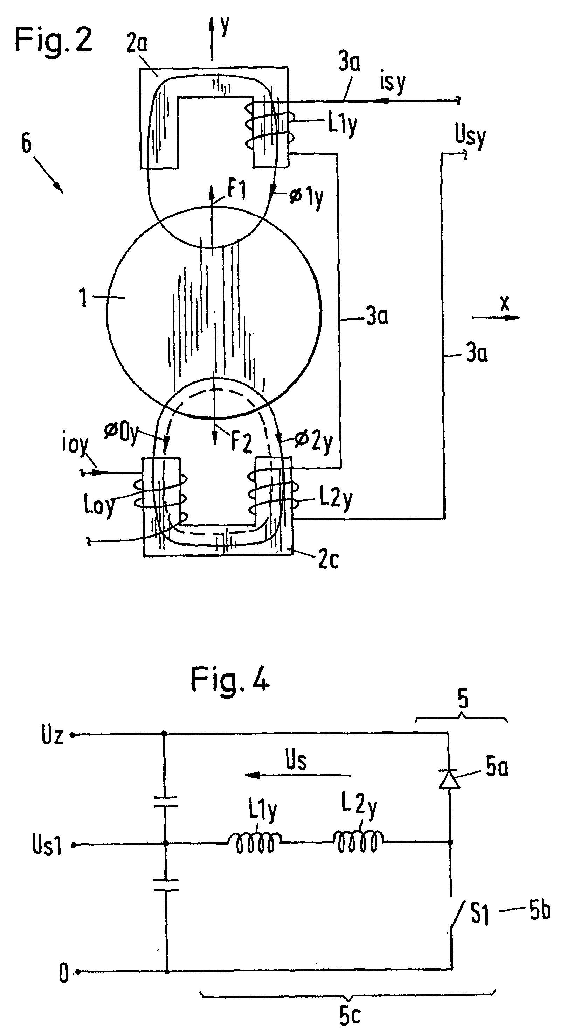

Fig. 2 zeigt ein weiteres Ausführungsbeispiel einer magnetischen Lagervorrichtung 6, welche nur in y-Richtung eine berührungslose Lagerung der Welle 1 erlaubt. Die bezüglich der Welle 1 gegenüberliegend angeordneten Spulenkerne 2a,2c sind u-förmig ausgestaltet und weisen je eine in Serie geschaltete Wicklung L1y,L2y auf. Am unteren Spulenkerne 2c ist zudem eine Vormagnetisierungswicklung Loy angeordnet, welche von einem konstanten Strom ioy durchflossen ist.

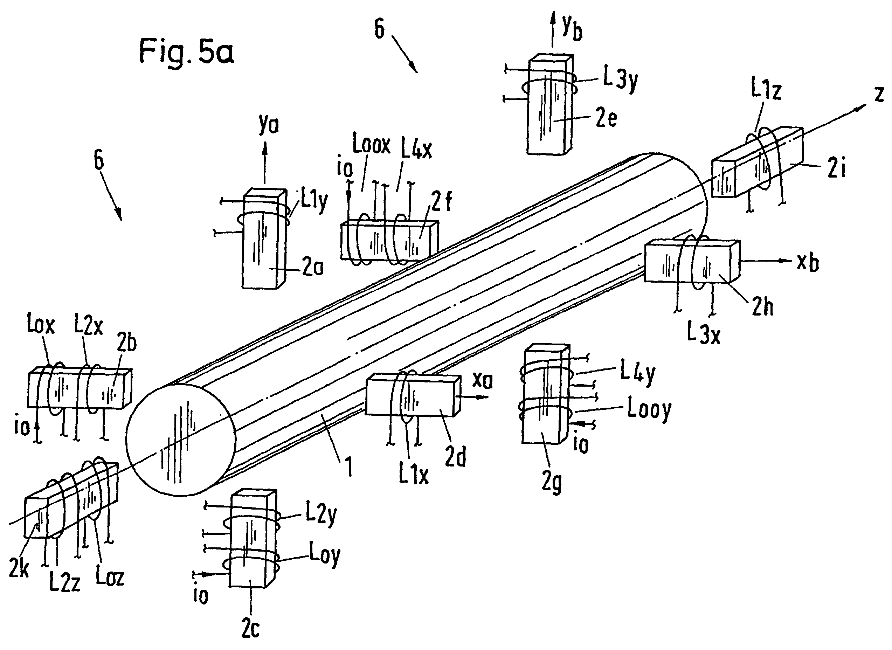

Fig. 5a zeigt schematisch dargestellt ein weiteres Ausführungsbeispiel einer Vorrichtung zur steuerbaren magnetischen Lagerung einer Welle 1 bezüglich fünf Freiheitsgrade, mit zwei bezüglich der axialen Richtung der Welle 1 versetzt angeordneten radialen magnetischen Lagervorrichtungen 6. Beide Lagervorrichtungen 6 sind identisch ausgestaltet und weisen gegenüberliegend angeordnete Spulenkerne 2a,2b,2c,2d,2e,2f,2g,2h mit Wicklungen L1x,L2x,L1y,L2y,L3x,L4x,L3y,L4y und Vormagnetisierungswicklungen Lox,Loy,Loox,Looy auf. Zwei zusätzliche Spulenkerne 2i,2k sind in axialer Richtung verlaufend jeweils an der Stirnseite der Welle 1 angeordnet, um die axiale Lage der Welle 1 gesteuert zu beeinflussen. Diese Spulenkerne 2i,2k weisen zwei in Serie geschaltete Wicklungen L1z,L2z auf sowie eine Vormagnetisierungswicklung Loz. Die Spulenkerne 2a,2b,2c,2d,2e,2f,2g,2h sind in Fig. 5a nur schematisch in stabförmiger Ausführung dargestellt. Vorteilhafterweise werden diese Spulenkerne u-förmig oder E-förmig verlaufend ausgestaltet.

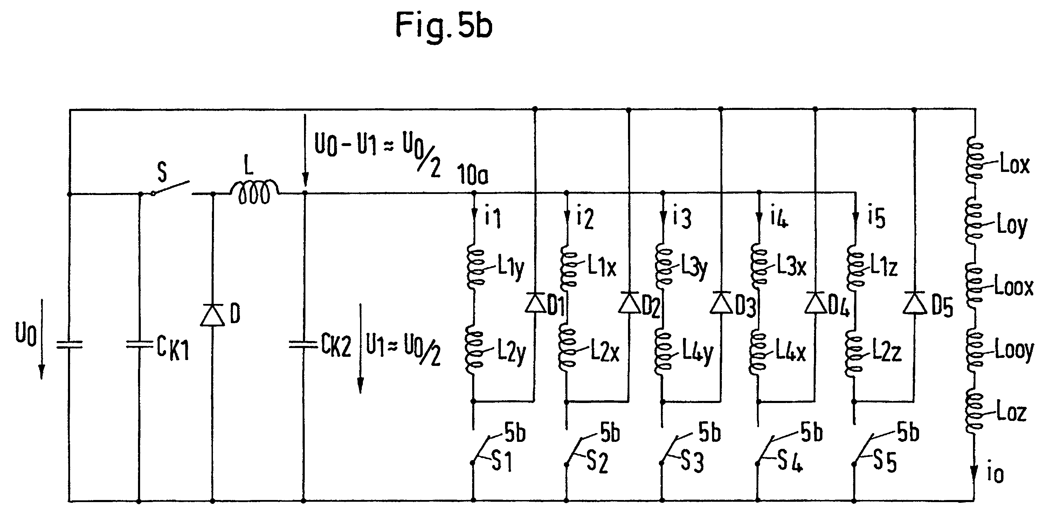

Fig. 5b zeigt ein Ausführungsbeispiel einer elektronischen Stellvorrichtung zum Ansteuern der Wicklungen der magnetischen Lagervorrichtung gemäss Fig. 5a. Die elektronische Schaltung wird von einer Gleichspannung Uo gespeist, wobei alle Vormagnetisierungsspulen Lox,Loy,Looy,Looy,Loz in Serie geschalten von einem konstanten Vormagnetisierungsstrom io durchflossen sind. Mit Hilfe eines getaktenen Schalters S, sowie mit einer den Strom glättenden Induktivität L und einem Kondensator CK2 wird eine Gleichspannung U1 mit einem Spannungwert erzeugt, der in einer Grössenordnung der Hälfte des Spannungswertes der Speisespannung Uo liegt. Die jeweils in Serie geschalteten, bezüglich der Lagervorrichtung 6 gegenüberliegend angeordneten Wicklungspaar L1y,L2y;L1x,L2x;L3y,L4y;L3x,L4x;L1z,L2z werden je von einem getakteten Schalter S1,S2,S3,S4,S5 individuell angesteuert, wobei zwischen dem Wicklungespaaren und den Schaltern jeweils eine Freilaufdiode D1,D2,D3,D4,D5 angeordnet ist. Ein Vorteil der elektronischen Schaltung gemäss Fig. 5b ist darin zu sehen, dass pro Freiheitsgrad der Welle 1 nur ein einziger getakteter Schalter S1,S2,S3,S4,S5 erforderlich ist, sodass für eine Anordnung gemäss Fig. 5a zur Regelung der Lage der Welle 1 nur fünf getaktete, unipolar arbeitende Schalter S1,S2,S3,S4,S5 erforderlich sind. Sofern die Spannungen U1 und Uo nicht an sich zur Verfügung stehen ist zudem ein zusätzlicher getakteter Schalter S erforderlich, um die Spannung U1 zu erzeugen. Diese Anordnung gemäss Fig. 5b bedarf eine geringe Anzahl und zudem ausschliesslich unipolar arbeitende Schalter S1,S2,S3,S4,S5, sodass diese Anordnung sehr kostengünstig herstellbar ist. Als getaktete Schalter S1,S2,S3,S4,S5 sind an sich bekannte elektronische Halbleiterschaltelemente aufweisend Transistoren, wie z.B. Bipolartransistoren, IGBT, FET, GTO oder andere aus dem Fachgebiet der Leistungsgelektronik bekannte elektronische Elemente geeignet.

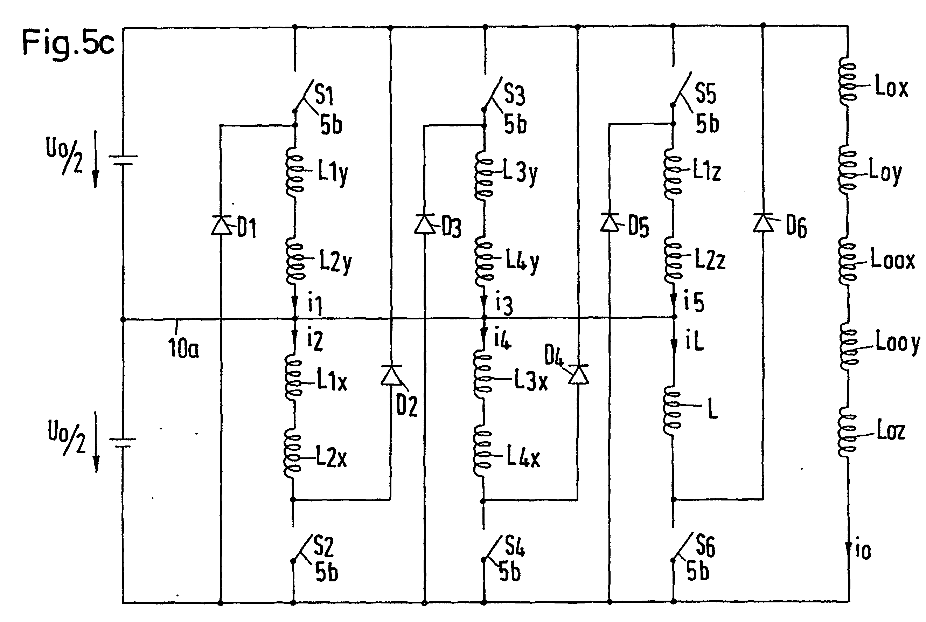

Fig. 5c zeigt ein weiteres Ausführungsbeispiel einer elektronischen Anordung zum Ansteuern der Wicklungen der in Fig. 5a dargestellten magnetischen Lagervorrichtung. Die Anordnung wird von zwei die gleichen Spannungswerte aufweisenden Gleichspannungsquellen Uo/2 gespeist. An den in Serie geschalteten Vormagnetisierungswicklungen Lox,Loy,Loox,Looy,Loz liegt eine Gleichspannung Uo an, welche einen Gleichstrom io bewirkt. Alle in Serie geschalteten Wicklungspaare L1y,L2y;L1x,L2x;L3y,L4y;L3x,L4x;L1z,L2z sind mit dem Mittenabgriff 10a verbunden, wobei anschliessend an die Wicklungspaare jeweils die getakteten Schalter S1,S2,S3,S4,S5 angeordnet sind. Eine zusätzlich angeordnete, mit dem Mittenabgriff 10a verbundene Induktivität L ist über das getaktete Schaltelement S6 ansteuerbar. Diese Anordnung mit Schaltelement S6 dient als eine Symmetrierchoppvorrichtung, um den Spannungswert Uo/2 des Mittenabgriffes 10a auch bei einer durch die Schalter S2,S2,S3,S4,S5 verursachten asymmetrischen Belastung ungefähr konstant zu halten. Die getaktet angesteuerten Schalter S1,S2,S3,S4,S5 können auch direkt mit dem Mittenabgriff 10a verbunden sein. Dies ist insbesondere vorteilhaft, wenn der Mittenabgriff 10a auf Erdpotential liegt, da in diesem Falle die Ansteuerung der Schalter S1,S2,S3,S4,S5 besonders einfach ist.

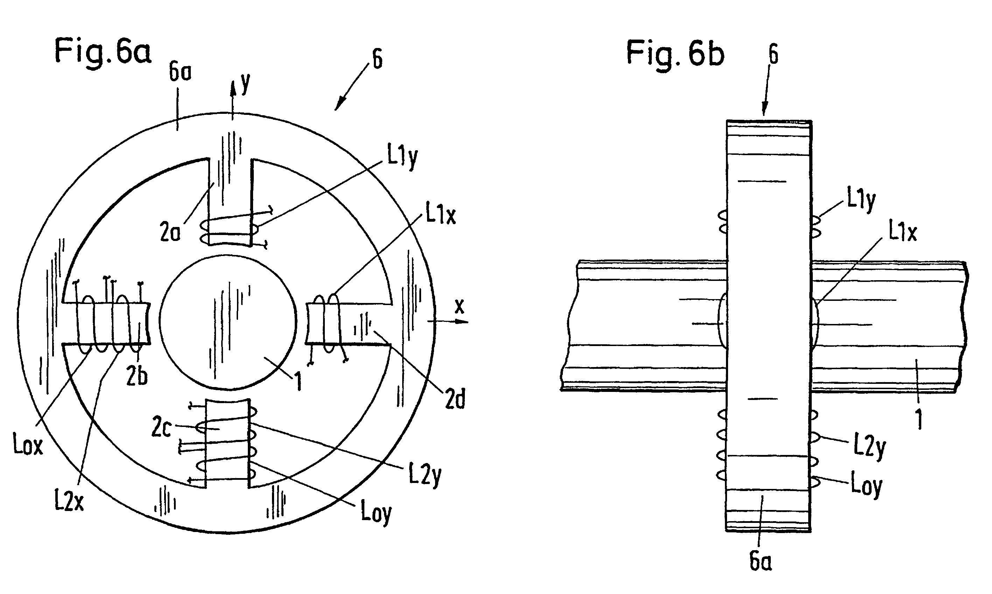

Fig. 6a zeigt ein weiteres Ausführungsbeispiel einer radialen magnetischen Lagervorrichtung 6, die, ansonst identisch zum Ausführungsbeispiel gemäss Fig. 1 ausgestaltet, einen ringförmig verlaufenden Stator 6a mit in radialer Richtung verlaufenden Spulenkernen 2a,2b,2c,2d aufweist. Fig. 6b zeigt eine Längsansicht der magnetischen Lagervorrichtung 6 gemäss Fig. 6a mit Welle 1, Stator 6a und Wicklungen L1y,L2y,L1x,Loy.

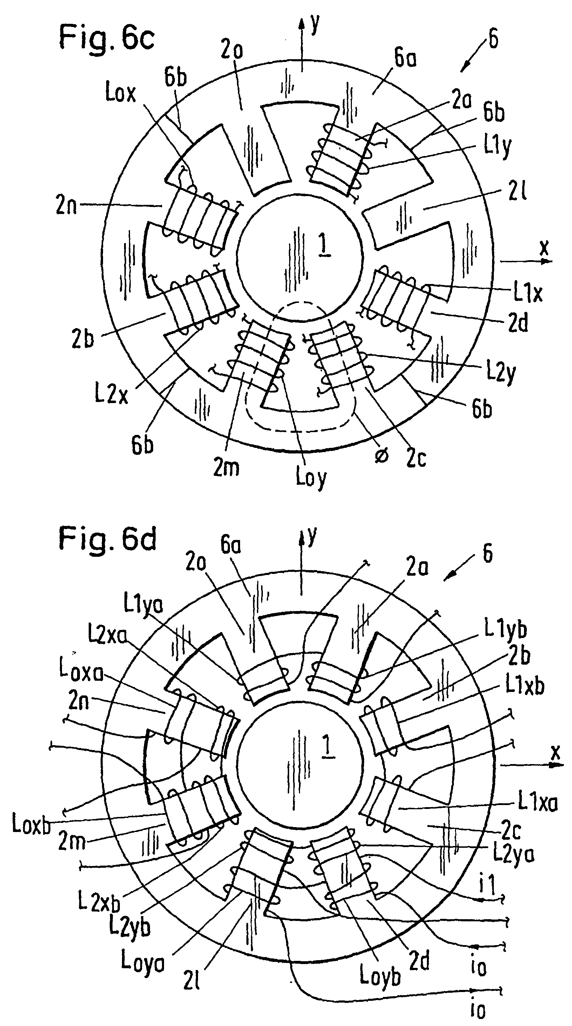

Fig. 6c zeigt ein weiteres Ausführungsbeispiel einer magnetischen Lagervorrichtung 6 mit einem ringförmig verlaufenden Stator 6a, der zudem acht in Umfangsrichtung gleichmässig beabstandete, in radialer Richtung verlaufende Spulenkerne 2a,2b,2c,2d,2l,2m,2n,2o aufweist. Die bezüglich der x-Achse gegenüberliegend angeordneten Spulenkerne 2a und 2c weisen je eine Wicklung L1y,L2y auf, welche in Serie geschaltet und von einen gemeinsamen Strom isy durchflossen sind. Die Vormagnetisierungswicklung Loy ist auf dem Spulenkerne 2m angeordnet, wobei der magnetische Flusskreis, ausgehend vom Spulenkerne 2m über den Rotor 1, den Spulenkerne 2c und dem die beiden Spulenkerne 2m,2c verbindenden Teilabschnitt des Stators 6a geschlossen ist, sodass die Vormagnetisierungswicklung Loy den bereits in Fig. 1 beschriebenen, kompensierenden Effekt auf die Wicklung L2y ausübt. Im Stator 6a können Trennstellen 6b angeordnet sein, welche den in Umfangsrichtung verlaufenden magnetischen Fluss behindern, sodass die beiden Spulenkerne 2m,2c zusammen mit dem diese verbindenden Teilabschnitt des Stators 6a ein Teilmagnet ausbilden, um möglichst den ganzen in der Spule Loy erzeugte magnetische Fluss φ durch den Spulenkerne 2c zu leiten. Weiter sind die Spulenkerne 2d,2b mit Wicklungen L1x,L2x bezüglich der y-Achse gegenüberliegend angeordnet, wobei die Vormagnetisierungswicklung Lox auf einem separaten Spulenkerne 2n angeordnet ist.

Fig. 6d zeigt ein weiteres Ausführungsbeispiel einer magnetischen Lagervorrichtung 6 mit einem bezüglich Fig. 6c identisch ausgestalteten Stator 6a. Die Wicklungen sind, im Vergleich zum Ausführungsbeispiel gemäss Fig. 6c, gleichmässiger verteilt angeordnet, um mögliche Streuflüsse, die zum Beispiel in Fig. 6c zwischen dem Spulenkerne 2a und 2o auftreten könnten, zu reduzieren. Die Wicklung L1y ist verteilt angeordnet und besteht aus den beiden Teilwicklungen L1ya und L1yb, welche auf den Spulenkernen 2a und 2o angeordnet sind. Die zweite Wicklung L2y befindet sich auf den den Spulenkernen 2a,2o gegenüberliegend angeordneten Spulenkernen 2l,2d, wobei diese Wicklung L2y ebenfalls aus zwei in Serie geschalteten Teilwicklungen L2ya, L2yb besteht. Zudem ist auf den Spulenkernen 21,2d die Vormagnetisierungswicklung Loy angeordnet, welche ebenfalls aus zwei in Serie geschalteten Teilwicklungen Loya,Loyb besteht. Äquivalent zu den in y-Richtung auf den Rotor 1 wirksamen Wicklungen sind die in x-Richtung wirksamen Spulen angeordnet, wobei die Wicklung L1x aus den beiden in Serie geschalteten Teilwicklungen L1xa und L1xb besteht, sowie die Wicklung L2x aus den beiden in Serie geschalteten Teilwicklungen L2xa und L2xb besteht. Die Vormagnetisierungswicklung Lox besteht aus den zwei in Serie geschalteten Teilwicklungen Loxa und Loxb. Das Ausführungsbeispiel gemäss Fig. 6d wird als eine heteropolare Anordnung bezeichnet, da die Welle 1 in Umfangsrichtung einen ständigen magnetischen Polwechsel, d.h. ein oder zwei Nordpole N, gefolgt von einem oder zwei Südpolen S, gefolgt von einen oder zwei Nordpolen N usw. aufweist.

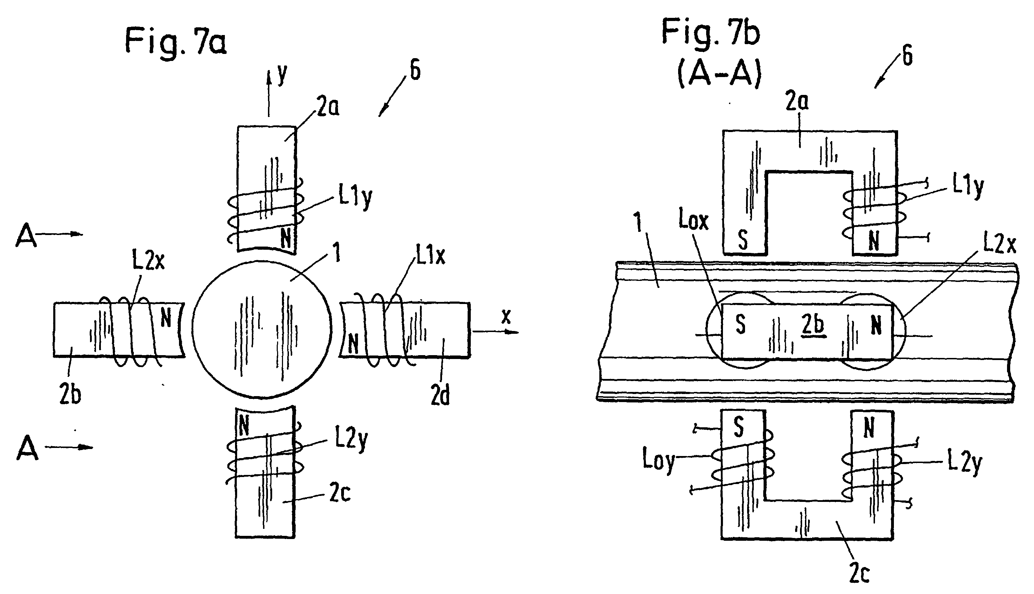

Fig. 7a zeigt eine Seitenansicht und Fig. 7b eine Längsansicht eines weiteren Ausführungsbeispieles einer magnetischen Lagervorrichtung 6. Diese Lagervorrichtung 6 weist u-förmig ausgestaltete Spulenkerne 2a,2b,2c,2d auf, wobei gegenüberliegend angeordnete Spulenkerne 2a,2c je eine Wicklung L1y,L2y aufweisen, welche in Serie geschaltet sind, und wobei an einem Spulenkerne 2c eine weitere, eine Vormagnetisierung bewirkende Wicklung Loy angeordnet ist. Diese Anordnung wird als eine homopolare Anordnung bezeichnet, weil, wie aus Fig. 7b ersichtlich, alle Spulenkerne 2a,2b,2c,2d einen magnetischen Nordpol N auf der rechten Seite, und einen magnetischen Südpol S auf der linken Seite aufweisen. In Umfangsrichtung der Welle 1 weisen somit alle Spulenkerne 2a,2b,2c,2d entweder einen Nordpol N oder einen Südpol S auf. Diese Anordnung weist den Vorteil auf, dass die Welle 1 nicht einem ständigen Polwechsel unterliegt, wodurch zum Beispiel magnetisch induzierte Wirbelströme vermeidbar sind.

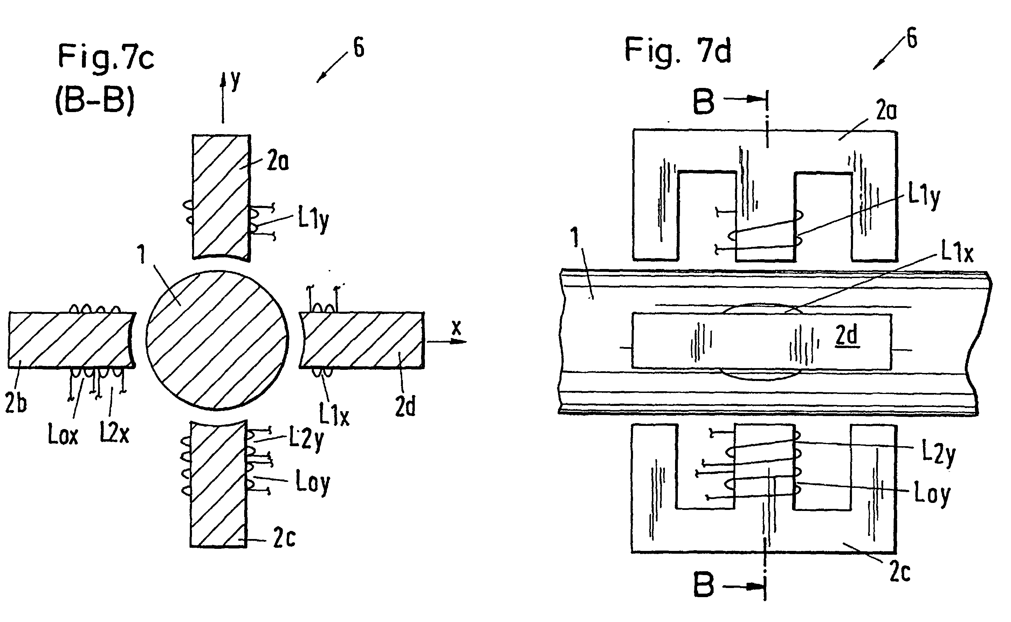

Fig. 7d zeigt eine Längsansicht eines weiteren Ausführungsbeispieles einer magnetischen Lagervorrichtung 6 mit E-förmig ausgestalteten Spulenkernen 2a,2b,2c,2d, wobei gegenüberliegend angeordnete Spulenkerne 2a,2c je eine Wicklung L1y,L2y aufweist, welche in Serie geschaltet sind. Zudem ist auf dem einen Spulenkerne 2c eine Vormagnetisierungswicklung Loy angeordnet. Fig. 7c zeigt einen Querschnitt durch die Anordnung gemäss Fig. 7d entlang der Linie B-B. Bezüglich der in x-Richtung wirksamen Wicklungen sind auf den gegenüberliegend angeordneten Spulenkernen 2b,2d ebenfalls Wicklungen L1x,L2x angeordnet, wobei auf dem Spulenkerne 2b zusätzlich eine Vormagnetisierungswicklung Lox angeordnet ist.

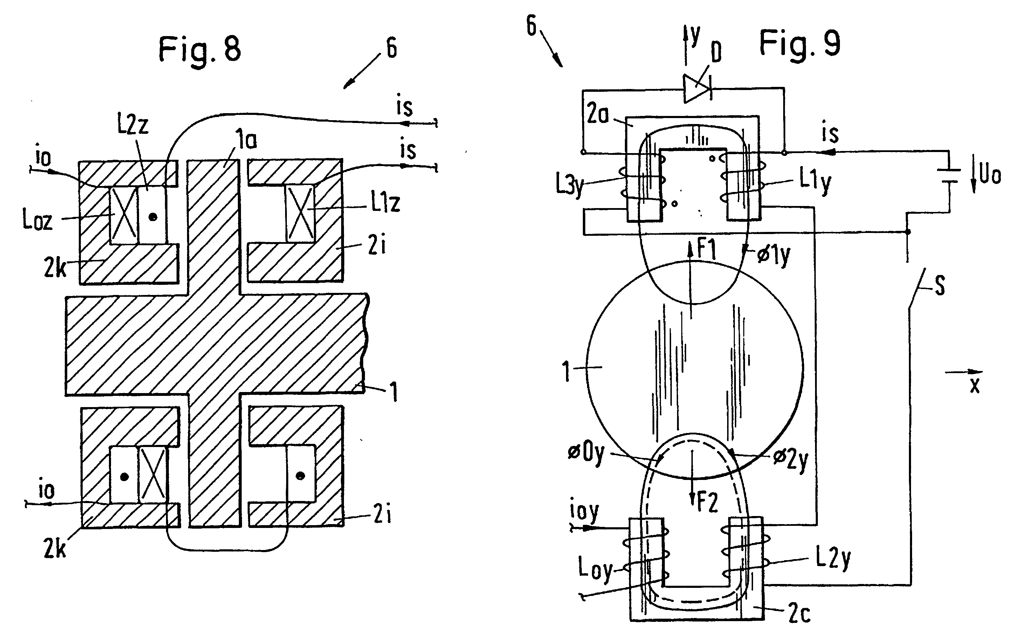

Fig. 8 zeigt ein Ausführungsbeispiel einer in bezüglich der Welle 1 axialen Richtung wirksamen magnetischen Lagervorrichtung 6, welche zwei ringförmig um die Welle 1 verlaufende, u-förmig ausgestaltete Spulenkerne 2k,2i umfasst. Zwischen den Spulenkernen 2k,2i ist ein scheibenförmiges Teil 1a der Welle 1 angeordnet. Die gegenüberliegend angeordneten Spulenkerne 2k,2i weisen je eine ebenfalls ringförmig ausgestaltete Wicklung L1z,L2z auf, welche in Serie geschalten sind und von einem gemeinsamen Strom is durchflossen sind. An einem der Spulenkerne 2k ist eine Vormagnetisierungswicklung Loz angeordnet, welche vom konstanten Vormagnetisierungsstrom io durchflossen ist.

Fig. 9 zeigt eine weitere magnetische Lagervorrichtung 6 mit einer Ansteuerelektronik. Die gegenüberliegend angeordneten Spulenkerne 2a,2c sind u-förmig ausgestaltet und weisen je eine in Serie geschaltete Wicklung L1y,L2y auf. An einem Spulenkerne 2c ist eine Vormagnetisierungswicklung Loy angeordnet. Zusätzlich ist am Spulenkerne 2a eine weitere Wicklung L2y angeordnet, welche über eine Freilaufdiode D geschaltet mit der Spannungsquelle Uo verbunden ist. Ein Vorteil dieser zusätzlichen Wicklung L3y sowie deren elektrischer Anschluss an die Spannungsquelle Uo ist darin zu sehen, dass keine gesplittete Spannungsquelle zum Betrieb der magnetischen Lagervorrichtung 6 erforderlich ist. Es genügt eine einzige Spannungsquelle Uo, ohne zusätzliche Mittel, wie in Fig. 5b dargestellt, um eine zusätzliche, unterhalb dem Spannungswert Uo liegende Spannung zu erzeugen. Vorteilhafterweise sind die beiden Wicklungen L1y und L3y bifilar gewickelt, um zwischen diesen beiden Wicklungen eine möglichst gute magnetische Koppelung zu bewirken.

## Patentansprüche

1. Magnetische Lagervorrichtung (6), umfassend einen Stator (6a) mit Spulenkernen (2a,2c;2b,2d), zum berührungsfreien Lagern eines ferromagnetischen Körpers (1), insbesondere einer Welle (1), in einer x-Richtung und einer senkrecht zu dieser verlaufenden y-Richtung, bei welcher Lagervorrichtung zumindest zwei in x-Richtung oder y-Richtung gegenüberliegend angeordnete Spulenkerne (2a,2c;2b,2d) vorgesehen sind, wobei auf jeweils mindestens einem dieser gegenüberliegend angeordneten Spulenkerne (2a,2c;2b,2d) eine Vormagnetisierungswicklung (Loy;Lox) angeordnet ist, mittels welcher durch eine Ansteuerungsvorrichtung ein konstanter Vormagnetisierungsfluss (φoy;φox) durch den entsprechenden Spulenkern (2a,2c;2b,2d) erzeugbar ist, und bei welcher Lagervorrichtung die in x-Richtung oder y-Richtung gegenüberliegend angeordneten Spulenkerne (2a,2c;2b,2d) jeweils eine Wicklung (L1y,L2y;L1x,L2x) aufweisen, welche in Serie oder parallel geschaltet sind und durch eine Ansteuerungsvorrichtung im Betrieb so gespeist werden, dass durch jeden dieser Spulenkerne (2a,2c;2b,2d) ein im Betrag etwa gleich grosser magnetischer Steuerfluss (φ1y,φ2y;φ1x,φ2x) erzeugt wird, der bei wenigstens einem der jeweils in x-Richtung oder in y-Richtung gegenüberliegenden Spulenkerne dem Vormagnetisierungsfluss (φoy;φox) entgegengesetzt gerichtet ist, **dadurch gekennzeichnet, dass** die Vormagnetisierungswicklungen (Loy;Lox) derart ausgebildet sind, dass in bezüglich der x-Richtung oder y-Richtung gegenüberliegend angeordneten Spulenkernen (2a,2c;2b,2d) eine asymmetrische Verteilung der Vormagnetisierungsflüsse (φoy;φox) erzeugbar ist.

2. Magnetische Lagervorrichtung (6) nach Anspruch 1, **dadurch gekennzeichnet, dass** die Vormagnetisierungswicklung (Loy;Lox) aus zwei Teilwicklungen besteht, wobei die eine Teilwicklung auf dem einen der beiden gegenüberliegenden Spulenkern (2c;2d) eine grössere Windungszahl aufweist als die andere Teilwicklung auf dem anderen der beiden gegenüberliegenden Spulenkerne (2a;2b).

3. Magnetische Lagervorrichtung nach einein der Ansprüche 1 oder 2, **gekennzeichnet durch** eine Mehrzahl von unabhängig ansteuerbaren Halbbrücken (5) oder unipolaren Stellvorrichtungen, wobei jede Halbbrücke (5) nur eine Schaltvorrichtung (5b) aufweist, und wobei jede Halbbrücke (5) oder unipolare Stellvorrichtung zur Ansteuerung der Wicklungen (L1y,L2y;L1x,L2x) zur Erzeugung des magnetischen Steuerflusses (φ1y,φ2y;φ1x,φ2x) mit diesen Wicklungen (L1y,L2y;L1x,L2x) elektrisch verbunden ist, und zwar derart, dass jede Halbbrücke (5) oder unipolare Stellvorrichtung zur Ansteuerung eines Paars von gegenüberliegend angeordneten Wicklungen (L1y,L2y;L1x,L2x) vorgesehen ist.

4. Verfahren zum Betrieb einer magnetischen Lagervorrichtung (6) zum berührungsfreien Lagern eines ferromagnetischen Körpers (1), insbesondere einer Welle (1), in einer x-Richtung und einer senkrecht zu dieser verlaufenden y-Richtung, welche Lagervorrichtung einen Stator (6a) mit Spulenkernen (2a,2c;2b,2d) umfasst, und bei welcher Lagervorrichtung zumindest zwei in x-Richtung oder y-Richtung gegenüberliegend angeordnete Spulenkerne (2a,2c;2b,2d) vorgesehen sind, wobei auf jeweils mindestens einem dieser gegenüberliegend angeordneten Spulenkerne (2a,2c;2b,2d) eine Vormagnetisierungewicklung (Loy;Lox) angeordnet ist, mittels welcher durch eine Ansteuerungsvorrichtung ein konstanter Vormagnetisierungsfluss (φoy;φox) durch den entsprechenden Spulenkern (2a,2c;2b,2d) erzeugt wird, und bei welcher Lagervorrichtung die in x-Richtung oder y-Richtung gegenüberliegend angeordneten Spulenkerne (2a,2c;2b,2d) jeweils eine Wicklung (L1y,L2y;L1x,L2x) aufweisen, welche in Serie oder parallel geschaltet sind und durch eine Ansteuerungsvorrichtung so gespeist werden, dass durch jeden dieser Spulenkerne (2a,2c;2b,2d) ein im Betrag etwa gleich grosser magnetischer Steuerfluss (φ1y,φ2y;φ1x,φ2x) erzeugt wird, der bei wenigstens einem der jeweils in x-Richtung oder in y-Richtung gegenüberliegenden Spulenkerne dem Vormagnetisierungsfluss (φoy;φox) entgegengesetzt gerichtet ist, **dadurch gekennzeichnet, dass** die Vormagnetisierungswicklungen (Loy;Lox) derart ausgebildet sind, dass in bezüglich der x-Richtung oder y-Richtung gegenüberliegend angeordneten Spulenkernen (2a,2c;2b,2d) eine asymmetrische Verteilung der Vormagnetisierungsflüsse (φoy;φox) erzeugt wird.

5. Verfahren zum Betrieb einer magnetischen Lagervorrichtung (6) nach Anspruch 4, **dadurch gekennzeichnet, dass** die eine Vormagnetisierung bewirkende Wicklung (Loy;Lox) mit einem Vormagnetisierungstrom (ioy;iox) betrieben wird, dass eine Halbbrücke (5) oder eine unipolare Stellvorrichtung zur Ansteuerung von Wicklungen (L1y,L2y;L1x,L2x) zur Erzeugung des magnetischen Steuerflusses (φ1y,φ2y;φ1x,φ2x) mit diesen Wicklungen (L1y,L2y;L1x,L2x) zur Erzeugung des magnetischen Steuerflusses (φ1y,φ2y;φ1x,φ2x) elektrisch verbunden ist und mit einer gleichgerichteten Zwischenkreisspannung (Uz) betrieben wird, und dass an die Wicklungen (L1y,L2y;L1x,L2x) zur Erzeugung des magnetischen Steuerflusses (φ1y,φ2y;φ1x,φ2x) eine unterhalb der Zwischenkreisspannung (Uz) liegende Speisespannung (Us) angelegt wird.

6. Verfahren nach Anspruch 5, **dadurch gekennzeichnet, dass** die Speisespannung (Us1) die Hälfte der Zwischenkreisspannung (Uz) beträgt.

7. Verfahren nach einem der Ansprüche 5 bis 6, **dadurch gekennzeichnet, dass** der maximal durch die Wicklungen (L1y,L2y;L1x,L2x) fliessende Strom (isy) gleich gross ist wie der Vormagnetisierungstrom (ioy;iox).

## Claims

1. Magnetic bearing apparatus (6) comprising a stator (6a) with coil cores (2a, 2c; 2b, 2d) for the contact-free journalling of a ferromagnetic body (1), in particular of a shaft (1), in an x-direction and in a y-direction extending perpendicular to the x-direction, in which bearing apparatus at least two coil cores (2a, 2c; 2b, 2d) are provided disposed opposite to one another in the x-direction or y-direction, with a pre-magnetizing winding (Loy; Lox) being arranged on at least one of these two oppositely disposed coil cores (2a, 2c; 2b, 2d) in each case by means of which a constant pre-magnetizing flux (φoy; φox) can be produced through the corresponding coil cores (2a, 2c; 2b, 2d) and in which bearing apparatus the coil cores (2a, 2c; 2b, 2d) arranged opposite to one another in the x-direction or y-direction each have a winding (L1y, L2y; L1x, L2x) which are connected in series or in parallel and are so fed in operation by a control device that a magnetic control flux (φ1y, φ2y; φ1x, φ2x) of substantially the same magnitude is produced through each of these coil cores (2a, 2c; 2b, 2d) with the magnetic control flux being directed opposite to the pre-magnetizing flux (φoy; φox) at at least one of the respective oppositely disposed coil cores in the x-direction or in the y-direction, **characterized in that** the pre-magnetization windings (Loy; Lox) are formed such that an asymmetrical distribution of the pre-magnetizing fluxes (φoy; φox) can be produced in coil cores (2a, 2c; 2b, 2d) arranged opposite one another with respect to the x-direction or y-direction.

2. Magnetic bearing apparatus (6) in accordance with claim 1, **characterized in that** the pre-magnetizing winding (Loy; Lox) consists of two part windings, with the one part winding on the one of the two oppositely disposed coil cores (2c, 2d) having a larger number of turns than the other part winding on the other of the two oppositely disposed coil cores (2a, 2b).

3. Magnetic bearing apparatus in accordance with claim 1 or claim 2, **characterized by** a plurality of independently controllable half-bridges (5) or unipolar regulating devices, with each half-bridge (5) only having one switch device (5b) and with each half-bridge (5) or unipolar regulating device being electrically connected for the control of the windings (L1y, L2y; L1x, L2x) to these windings (L1y, L2y; L1x, L2x) for the generation of the magnetic control flux (φ1y, φ2y; φ1x, φ2x) and indeed in such a way that each half-bridge (5) or unipolar regulating device is provided for the control of a pair of oppositely disposed windings (L1y, L2y; L1x, L2x).

4. Method for the operation of the magnetic bearing apparatus (6) with coil cores (2a, 2c; 2b, 2d) for the contact-free journalling of a ferromagnetic body (1), in particular of a shaft (1), in an x-direction and in a y-direction extending perpendicular to the x-direction, which bearing apparatus includes a stator (6a) with coil cores (2a, 2c; 2b, 2d) and in which bearing apparatus at least two coil cores (2a, 2c; 2b, 2d) are provided disposed opposite to one another in the x-direction or y-direction, with a pre-magnetizing winding (Loy; Lox) being arranged on at least one of these two oppositely disposed coil cores (2a, 2c; 2b, 2d) in each case by means of which a constant pre-magnetizing flux (φoy; φox) can be produced through the corresponding coil cores (2a, 2c; 2b, 2d) and in which bearing apparatus the coil cores (2a, 2c; 2b, 2d) arranged opposite to one another in the x-direction or y-direction each have a winding (L1y, L2y; L1x, L2x) which are connected in series or in parallel and are so fed in operation by a control device that a magnetic control flux (φ1y, φ2y; φ1x, φ2x) of substantially the same magnitude is produced through each of these coil cores (2a, 2c; 2b, 2d) with the magnetic control flux being directed opposite to the pre-magnetizing flux (φoy; φox) at at least one of the respective oppositely disposed coil cores in the x-direction or in the y-direction, **characterized in that** the pre-magnetizing windings (Loy, Lox) are made such that an asymmetrical distribution of the pre-magnetizing fluxes (φoy; φox) is produced in coil cores (2a, 2c; 2b, 2d) arranged oppositely to one another with respect to the x-direction or y-direction.

5. Method of operating a magnetic bearing apparatus in accordance with claim 4, **characterized in that** the winding (Loy; Lox) which causes a pre-magnetization is operated with a pre-magnetizing current (ioy; iox), **in that** a half-bridge (5) or a unipolar regulating device for the control of the windings (L1y, L2y; L1x, L2x) is electrically connected to these windings (L1y, L2y; L1x, L2x) for the generation of the magnetic control flux (φ1y, φ2y; φ1x, φ2x) and is operated with a rectified intermediate circuit voltage (Uz); and **in that** a feed voltage (Us) lying below the intermediate circuit voltage (Uz) is applied to the windings (L1y, L2y; L1x, L2x) for the generation of the magnetic control flux (φ1y, φ2y; φ1x, φ2x).

6. Method in accordance with claim 5, **characterized in that** the feed voltage (Us1) amounts to half the intermediate circuit voltage (Uz).

7. Method in accordance with one of the claims 5 to 6, **characterized in that** the maximum current (isy) going through the windings (L1y, L2y; L1x, L2x) is of the same size as the pre-magnetizing current (ioy; iox).

## Revendications

1. Dispositif de palier magnétique (6) comprenant un stator (6a) avec des noyaux de bobine (2a, 2c; 2b, 2d) pour le logement sans contact d'un corps ferromagnétique (1), notamment d'un arbre (1), dans une direction x et une direction y s'étendant perpendiculairement à celle-ci, où dans ledit dispositif de palier sont prévus au moins deux noyaux de bobine (2a, 2c; 2b,2d) opposés dans la direction x ou la direction y, où est disposé sur respectivement au moins l'un de ces noyaux de bobine (2a, 2c; 2b, 2d) disposés d'une manière opposée un enroulement de prémagnétisation (Loy ; Lox) au moyen duquel, par un dispositif d'excitation, un flux de prémagnétisation constant (φoy ; φox) peut être produit à travers le noyau de bobine correspondant (2a, 2c; 2b, 2d), et où dans le dispositif de palier, les noyaux de bobine (2a, 2c; 2b, 2d) opposés dans la direction x ou la direction y présentent chacun un enroulement (L1y, L2y; L1x, L2x) qui sont montés en série ou parallèlement et qui sont alimentés par un dispositif d'excitation lors du fonctionnement de façon qu'il soit produit à travers chacun de ces noyaux de bobine (2a, 2c; 2b, 2d) un flux de commande magnétique ((φ1y ; φ2y; φ1x, φ2x) d'une grandeur à peu près égale qui est orienté dans le cas d'au moins l'un des noyaux de bobine opposés respectivement dans la direction x ou la direction y d'une manière opposée au flux de prémagnétisation (φoy ; φox), **caractérisé en ce que** les enroulements de prémagnétisation (Loy; Lox) sont réalisés de façon qu'il peut être produit dans des noyaux de bobine (2a, 2c; 2b, 2d) disposés d'une manière opposée relativement à la direction x ou la direction y une répartition asymétrique des flux de prémagnétisation (φoy ; φox).

2. Dispositif de palier magnétique (6) selon la revendication 1, **caractérisé en ce que** l'enroulement de prémagnétisation (Loy; Lox) est constitué de deux enroulements partiels, où un enroulement partiel sur l'un des deux noyaux de bobine opposés (2c; 2d) présente un nombre d'enroulements plus grand que l'autre enroulement partiel sur l'autre des deux noyaux de bobine opposés (2a; 2b).

3. Dispositif de palier magnétique selon l'une des revendications 1 ou 2, **caractérisé par** une pluralité de demi-ponts (5) pouvant être excités indépendamment ou de dispositifs de positionnement unipolaires où chaque demi-pont présente seulement un dispositif de commutation (5b) et où chaque demi-pont (5) ou dispositif de positionnement unipolaire, pour l'excitation des enroulements (L1y, L2y; L1x, L2x) pour la production du flux de commande magnétique (φ1y, φ2y; φ1x, φ2x) est relié électriquement à ces enroulements (L1y, L2y; L1x, L2x) et cela de façon que chaque demi-pont (5) ou dispositif de positionnement unipolaire est prévu pour l'excitation d'une paire d'enroulements opposés (L1y, L2y; L1x, L2x).

4. Procédé de fonctionnement d'un dispositif de palier magnétique (6) pour le logement sans contact d'un corps ferromagnétique (1), notamment d'un arbre (1), dans une direction (x) et une direction (y) s'étendant perpendiculairement à celle-ci, ledit dispositif de palier comprenant un stator (6a) avec des noyaux de bobine (2a, 2c; 2b, 2d) et où sont prévus dans le dispositif de palier au moins deux noyaux de bobine (2a, 2c; 2b, 2d) opposés dans la direction x ou la direction y, où est disposé sur respectivement au moins l'un de ces noyaux de bobine opposés (2a, 2c; 2b, 2d) un enroulement de prémagnétisation (Loy, Lox) au moyen duquel est produit par un dispositif d'excitation un flux de prémagnétisation constant (φoy; φox) à travers le noyau de bobine correspondant (2a, 2c; 2b, 2d) et dans ce dispositif de palier, les noyaux de bobine (2a, 2c; 2b, 2d) opposés dans la direction x ou la direction y présentent chacun un enroulement (L1y, L2y; L1x, L2x) qui sont montés en série ou parallèlement et qui sont alimentés par un dispositif d'excitation de façon que soit produit à travers chacun de ces noyaux de bobine (2a, 2c; 2b, 2d) un flux de commande magnétique (φ1y, φ2y; φ1x, φ2x) d'une grandeur approximativement égale qui est orienté dans le cas d'au moins l'un des noyaux de bobine opposés respectivement dans la direction x ou la direction y d'une manière opposée au flux de prémagnétisation (φoy; φox), **caractérisé en ce que** les enroulements de prémagnétisation (Loy; Lox) sont réalisés de façon à produire dans des noyaux de bobine (2a, 2c; 2b, 2d) opposés relativement à la direction x ou la direction y une répartition asymétrique des flux de prémagnétisation (φoy; φox).

5. Procédé de fonctionnement d'un dispositif de palier magnétique (6) selon la revendication 4, **caractérisé en ce que** l'enroulement (Loy, Lox) provoquant une prémagnétisation est amené à fonctionner avec un courant de prémagnétisation (ioy ; iox), **en ce qu'**un demi-pont (5) ou un dispositif de positionnement unipolaire pour l'excitation des enroulements (L1y, L2y; L1x, L2x), pour la production du flux de commande magnétique (φ1y, φ2y; φ1x, φ2x) est relié électriquement à ces enroulements (L1y, L2y; L1x, L2x) pour la production du flux de commande magnétique (φ1y, φ2y; φ1x, φ2x) et est amené à fonctionner avec une tension de circuit intermédiaire redressée (Uz) et **en ce qu'**il est appliqué aux enroulements (L1y, L2y; L1x, L2x) pour la production du flux de commande magnétique (φ1y, φ2y; φ1x, φ2x) une tension d'alimentation (Us) située en dessous de la tension du circuit intermédiaire (Uz).

6. Procédé selon la revendication 5, **caractérisé en ce que** la tension d'alimentation (Us1) représente la moitié de la tension de circuit intermédiaire (Uz).

7. Procédé selon l'une des revendications 5 à 6, **caractérisé en ce que** le courant (isy) passant au maximum à travers les enroulements (L1y, L2y; L1x, L2x) est aussi grand que le courant de prémagnétisation (ioy; iox).
